# EUROPEAN PATENT APPLICATION

(11) **EP 3 480 426 A1**
(43) Date of publication of application: **08.05.2019**
(21) Application number: 17199735.6
(22) Date of filing: 02.11.2017
(51) Int. Cl.: F01D 5/14

(54) **ADAPTIVELY MACHINING OF A WORKPIECE WITH AN AEROFOIL SHAPED SECTION**

(71) Applicant: Siemens Aktiengesellschaft, 80333 München (DE)
(72) Inventor: Szijarto, Janos, 61291 Finspong (SE); Wiklund, Mats, 58935 Linköping (SE)

(57) **Abstract**

The invention is directed to a method of adaptively machining of a workpiece (100) which comprises an aerofoil shaped section (102). The workpiece is measured at a certain number of probing points prior to machining. The present invention relates to the limitation of the number of probing points based on a comparison with a nominal workpiece model.

## Description

### FIELD OF THE INVENTION

The invention relates to mechanical post-processing of a workpiece based on putting in relation a profile of the workpiece with a digital model.

### BACKGROUND OF THE INVENTION

In turbomachines usually a flow path is defined through which a fluid is guided. In the flow-path vanes and blades may be present and arranged to compress the fluid - for example in case of a stand alone compressor or a compressor of a gas turbine engine - or to expand the fluid - for example in a expansion turbine section of a gas or steam turbine engine. In the following the explanation of the inventive concept is provided for a gas turbine engine rotor blade of an expansion turbine section of that engine, but the principles also apply for other types of turbomachinery, for the compressor section of the gas turbine engine, or also for stator vanes instead of rotor blades.

In a gas turbine engine, air is pressurized in a compressor and mixed with fuel in a combustor for generating hot combustion gases. The hot gases are then channelled towards a turbine which transforms the energy from the hot gases into work for powering the compressor and other devices which converts power, for example an upstream fan in a typical aircraft turbofan engine application, a generator in power generation application, or connected rotating machines like pumps or compressors driven by the gas turbine engine.

The turbine stages include stationary turbine nozzles having a row of vanes which channel the combustion gases into a corresponding row of rotor blades extending radially outwardly from a supporting rotor disc. The vanes and blades have aerofoils which may be hollow. Outer shapes of the aerofoils are optimised in dimension and shape based on aerodynamic considerations.

In the following, the terms upstream and downstream and also the terms leading and trailing refer to the flow direction of the airflow and/or working hot gas flow through the gas turbine engine. The terms axial and radial are made with reference to a rotational axis of the gas turbine engine.

Each aerofoil includes a generally concave pressure sidewall and, an opposite, generally convex suction sidewall extending radially outwardly along a span from an aerofoil base to an opposite end of the aerofoil - which may be an aerofoil tip, a shroud, a platform - and axially in a chordwise direction between a leading and a trailing edge.

It is desirable that an aerofoil of a manufactured workpiece follows exactly the shape and dimensions as it was designed. Based on the selected manufacturing processed used to build the aerofoil a manufactured aerofoil may differ from the designed optimal shape and dimension.

A common manufacturing method for turbine blades and vanes is casting. Casting may have limits in respect of thin structures, so that overly thin regions need to be avoided when designing such components. Thus, blade and vane castings have today limits in how thin a trailing edge of its aerofoils can be. There is a trade-off between thickness and metallurgical demands. If the trailing edge is too thin it is a high risk of insufficient metallurgical quality. From an aerodynamic point of view there are benefits of making thin trailing edges.

Thus it is the goal to provide a manufacturing method that meets good aerodynamic design properties of an aerofoil but can be reliably manufactured.

### SUMMARY OF THE INVENTION

The present invention seeks to mitigate the mentioned drawbacks by providing an alternative manufacturing method.

This objective is achieved by the independent claims. The dependent claims describe advantageous developments and modifications of the invention.

In accordance with the invention there is provided a method of adaptively machining of a workpiece - particularly built from metal or an alloy - to conform with pre-defined nominal dimensions of the workpiece comprising the steps of:
Step 1: Providing the workpiece - i.e. the physical workpiece - which comprises an aerofoil shaped section, the aerofoil shaped section comprising a pressure side surface, a suction side surface, and a trailing edge, the trailing edge extending in a spanwise direction. Thus, the workpiece may particularly be a blade or a vane, particularly of a turbomachine, especially a gas turbine engine.
Step 2: Providing digitised nominal surface profile data representing a nominal surface profile of a nominal workpiece model. The digitised nominal surface profile data may be geometric design data. The nominal surface profile represents the contour, envelope, or geometric characteristic of the workpiece model. The nominal surface profile may be a 3-D model (3-D: three dimensional) or a CAD model (CAD: computer aided design).
Step 3: Probing a surface profile of the workpiece in a plurality of chordwise oriented planes substantially perpendicular to a spanwise direction to determine surface profile coordinates, the planes being located at different span heights, wherein in each plane the probing is performed at at least three probing points located at surface portions of the aerofoil shaped section in proximity of the trailing edge.
Step 4: Determining a plurality of offset information, each representing an offset - i.e. positional deviation - for each probing point between the surface profile coordinates and corresponding nominal surface profile coordinates of the digitised nominal surface profile data.
Step 5: Generating machining path data for removing excess material of the workpiece based on the offset information. The generating machining path data may include creating command codes to drive or operate a machining tool. This step may be considered to generate a CAM model (CAM: computer aided manufacturing).
Step 6: Machining, particularly milling, the aerofoil shaped section in chordwise direction according to the machining path data to remove the excess material to conform the surface profile of the aerofoil shaped section to the nominal surface profile. The milling may be particularly performed by a 5 axis milling machine. Instead of or additionally to milling, also a grinding process may be used for machining.

This method allows to use casting or another reliable basic manufacturing process for created a workpiece with good metallurgy and brings this workpiece in a post-processing close to the perfect dimensions. The proposed method also tackles the problem that the workpieces provided from the casting may have variations between different individual workpieces, for which it may be impossible to provide a constant machining process. Thus, the machining is adapted to every individual workpiece.

As the method is directed to machining workpieces with an aerofoil shaped section, such turbine components will have better performance due to reduced losses in the flow path of the turbomachine. A thinner trailing edge, which may be created by the given method, may result in better aerodynamic, thus reduced aerodynamic losses, and in final consequence in higher efficiency of the turbomachine.

In an exemplary embodiment the step of machining the aerofoil may comprise partial steps of: as a first partial step, rough machining, particularly milling, according to the machining path data to remove a first amount of the excess material, and as a consecutive second partial step, fine machining, particularly polishing, according to the machining path data to remove a second amount of the excess material.

That means that optionally individual machining path data is generated for the first partial step and the second partial step.

In a further embodiment, the machining the aerofoil may be limited to the pressure side surface of the aerofoil, particularly limited to the pressure side surface of the aerofoil in proximity of the trailing edge. This limitation to a specific region with the thinnest structures reduces the probing and also the machining time. The number of probing points can be reduced. The machining operation possibly can be limited to less complex three dimensional movements of a machining tool.

Particularly, the machining the aerofoil may be limited to the pressure side surface of the aerofoil from the trailing edge up to 80%, preferably up to 70%, of an overall pressure side surface length from the trailing edge to a leading edge of the aerofoil shaped section. That means that parts of the overall aerofoil shaped surface - i.e. a leading edge region - would not be probed or machined and therefore the processing time would be reduced.

In a preferred embodiment, the probing at the at least three probing points may be performed at one probing point at the trailing edge; and at least one probing point, preferably two probing points, at the pressure side surface in proximity of the trailing edge; and at least one probing point, preferably two probing points, at the suction side surface in proximity of the trailing edge. Thus, the number of probing points may be limited to three, four, five probing points per span height. In general the number of probing points should be less than ten probing points per span height.

With probing a technique is meant to measure three-dimensional coordinates of surface points by using a physical probe. Preferably touch-trigger probes can be used. Scanning of a surface by optical means (e.g. laser scanning) or by electromagnetic waves is not considered probing in this context.

In an embodiment the probing at the at least three probing points may be performed such that at least one suction side probing point, preferably two suction side probing points, are defined at the suction side surface in proximity of the trailing edge. Further, a first straight line may be defined through two of the at least one suction side probing points to define a first reference line to align with the a first nominal reference line of the nominal workpiece model.

Furthermore, in a variant of this embodiment, the probing at the at least three probing points may further be performed such that one trailing edge probing point may be defined at the trailing edge. A second straight line may be defined through trailing edge probing point, the second straight line being perpendicular to the first straight line, wherein the second straight line may define a second reference line to align with the a second nominal reference line of the nominal workpiece model.

As a particular embodiment, the probing at the at least three probing points may be performed within a first one of the chordwise oriented planes such that at least one pressure side probing point, preferably a single probing point or two probing points, may be defined at least at the pressure side surface in proximity of the trailing edge; and a first circle located in the first one of the chordwise oriented planes may be defined with a curve through a first one of the at least one pressure side probing points with a first radius; and a second circle located in the first one of the chordwise oriented planes may be defined with a curve through a second one of the at least one pressure side probing points with a second radius; and a first group of machining path data may be defined by a first segment of the first circle; and a second group of machining path data may be defined by a segment of the second circle.

That means that the machining path may follow in parts the curvature of the first circle and in parts the curvature of the second circle. Thus, a simple model is derived from the determined offset information.

In a further configuration a substantially elliptic envelope - possibly also circular envelope - for the first circle and the second circle may be determined within the first one of the chordwise oriented planes for a pressure side surface region located between the first circle and the second circle, the elliptic envelope defining a curved connection between a tangent of the first circle and a tangent of the second circle. A third group of machining path data may be defined by the envelope or a segment of the envelope.

In an embodiment the first radius and the second radius may be predefined or alternatively may be derived from a nominal curvature of the nominal workpiece model at the nominal surface profile coordinates of the digitised nominal surface profile data which correspond to the respective surface profile coordinates. In case of predefined radiuses this means that only the fictitious centre point of the circles may vary for each individual workpiece and for each individual span height.

In a further embodiment intermediate machining path data may be generated from a first set of the generated machining path data for a first one of the plurality of chordwise oriented planes and from a second set of generated machining path data for a second one of the plurality of chordwise oriented planes, the intermediate machining path data defining a plurality of chordwise arranged machining paths each oriented parallel to another. Based on that the aerofoil shaped section may be machined, particularly milled, along the plurality of chordwise arranged machining paths according to the intermediate machining path to remove the excess material to conform the aerofoil shaped section profile to the nominal surface profile.

This may be performed by defining a spanwise envelope or by blending the determined offset information.

This procedure allows machining a workpiece based on measurements at only a limited number of span heights. For example a maximum of 10 span heights are evaluated. Particularly a minimum of 5 span heights are evaluated. So a sufficient number of offset information is collected but the amount of probing steps is kept at a minimum.

In a further embodiment, the offset information and/or the machining path data may be generated only for, in radial or spanwise direction, a mid region of the trailing edge, the mid region being defined as a region with a distance to longitudinal ends of the trailing edge of at least 20% of an overall length of the trailing edge. The longitudinal ends of the trailing edge may be defined by a platform or a tip of the blade or vane that represents the workpiece and that comprises the aerofoil shaped section.

The invention is further directed to a CAD module for generating machining path data for adaptively machining of a workpiece to conform with pre-defined nominal dimensions of the workpiece. The CAD module is arranged to retrieve provided surface profile coordinates for the workpiece, the workpiece comprising an aerofoil shaped section, the aerofoil shaped section comprising in turn a pressure side surface, a suction side surface, and a trailing edge, the trailing edge extending in a spanwise direction. The surface profile coordinates are provided by probing the surface profile of the workpiece in a plurality of chordwise oriented planes substantially perpendicular to the spanwise direction to determine surface profile coordinates, the planes being located at different span heights, wherein in each plane the probing is performed at at least three probing points located at surface portions of the aerofoil shaped section in proximity of the trailing edge. The CAD module is further arranged to retrieve provided digitised nominal surface profile data representing a nominal surface profile of a nominal workpiece model. The CAD module is arranged to determine a plurality of offset information, each representing an offset for each probing point between the surface profile coordinates and corresponding nominal surface profile coordinates of the digitised nominal surface profile data. Further, the CAD module is arranged to generate machining path data for removing excess material of the workpiece based on the offset information, the machining path data defining information for machining, particularly milling, the aerofoil shaped section in chordwise direction according to the machining path data to remove the excess material to conform the aerofoil shaped section profile to the nominal surface profile.

The CAD module may be a sub-component for a computer aided design package.

Besides, the invention is directed to an arrangement comprising of a probing device, the CAD module, and a machining device, wherein these devices and the CAD module interact as explained above by a method of adaptively machining of a workpiece.

Furthermore, the invention is directed to a vane or blade comprising an aerofoil shaped section characterised in that the vane or blade is an adaptively machined workpiece with at least one aerofoil shaped section processed according to the above mentioned method.

The vane or blade may comprise a single aerofoil or may be arranged as a doublet (with two aerofoils), as a triplet (with three aerofoils), or as a component with even more aerofoils attached to another as a single, monolithic component, which may be, as example, be a single cast component.

It has to be noted that embodiments of the invention have been and will be in the following described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Furthermore examples have been and will be disclosed in the following sections by reference to gas turbine engine components. The invention is also applicable for any type of turbomachinery, e.g. compressors or steam turbines. Furthermore the general concept can be applied even more generally to any type of machine with an aerofoil shaped structure that requires tight geometric tolerances. It can be applied to rotating parts - e.g. rotor blades - as well as stationary parts - e.g. stator vanes.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- FIG. 1:: shows schematically a blade in which probing areas and an excess of material for post-machining is highlighted;
- FIG. 2:: illustrates a blade in which a surface section is post-machined;
- FIG. 3:: illustrates the probing and the machining path according to an embodiment of the inventive method;
- FIG. 4-8:: illustrate some specific elements of FIG. 3;
- FIG. 9:: illustrates the machining process as one step of the inventive method;
- FIG. 10:: shows schematically an exemplary milling cutter for machining a surface of the workpiece;
- FIG. 11:: shows schematically a machined workpiece after performing the inventive method;
- FIG. 12:: illustrates the inventive method for a stator vane configured as a doublet with two aerofoils.

The illustration in the drawing is schematic. It is noted that for similar or identical elements in different figures, the same reference signs will be used.

Some of the features and especially the advantages will be explained for an assembled gas turbine during operation, but obviously the features can be applied also to the single components of the gas turbine but may show the advantages only once assembled and during operation. But when explained by means of a gas turbine during operation none of the details should be limited to a gas turbine while in operation.

### DETAILED DESCRIPTION OF THE INVENTION

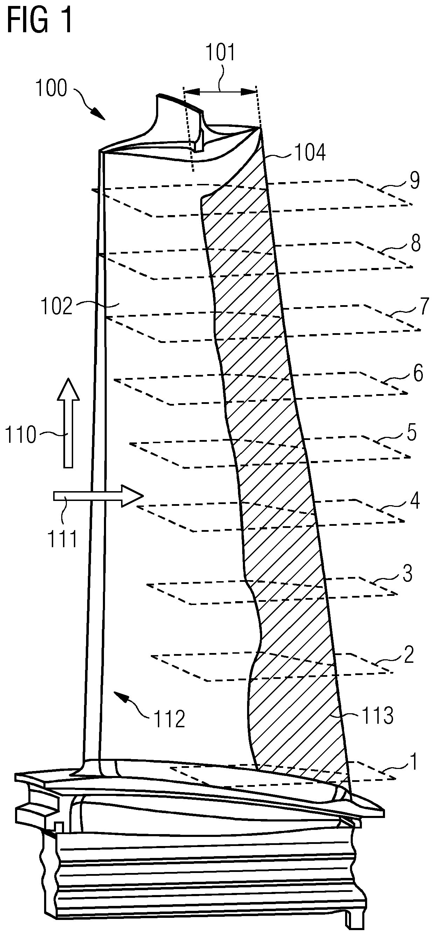

Referring now to FIG. 1, a rotor blade of, for example, a gas turbine engine is shown as a workpiece 100. The workpiece 100 may be a cast component which may not fulfil geometrical requirements, particularly at a trailing edge region 101 of its aerofoil shaped section 102. The trailing edge region 101 may be a surface section of the aerofoil shaped section 102 in a proximity of a trailing edge 104.

In FIG. 1 a spanwise direction is indicated by arrow 110, a chordwise direction is indicated by arrow 111. Assuming the rotor blade would be equipped in a gas turbine engine, the chordwise direction 111 would conform with an axial direction being in line with a rotating axis of the gas turbine engine. The spanwise direction 110 would conform with a radial direction of the gas turbine engine, the radial direction being perpendicular to the axial direction.

FIG. 1 shows also chordwise oriented planes 1, 2, 3,..., 9 - in the example nine planes are provided just as an example - that define regions in which a surface profile of the workpiece 100 will be probed. The probing may particularly be performed at a pressure side surface 112 of the aerofoil shaped section 102, but additional reference points may be probed at a suction side surface.

Thus the inventive method of adaptively machining of a workpiece 100 to conform with pre-defined nominal dimensions of the work-piece 100 - e.g. taken from a CAD model - comprises the initial steps of: (i) providing the workpiece 100 which comprises an aerofoil shaped section 102, the aerofoil shaped section 102 comprising a pressure side surface 112, a suction side surface, and a trailing edge 104, the trailing edge 104 extending in a spanwise direction 110; (ii) providing digitised nominal surface profile data representing a nominal surface profile of a nominal workpiece model; and probing a surface profile of the workpiece 100 in a plurality of the chordwise oriented planes 1, 2, ..., 9 substantially perpendicular to the spanwise direction 110 to determine surface profile coordinates, the planes being located at different span heights, wherein in each plane the probing is performed at at least three probing points located at surface portions of the aerofoil shaped section 102 in proximity of the trailing edge 104.

The method further comprises the step (iv) of determining a plurality of offset information, each representing an offset for each probing point between the surface profile coordinates and corresponding nominal surface profile coordinates of the digitised nominal surface profile data. The offset may be a distance value in the respective chordwise oriented plane (1, 2, ..., or 9) between a real position and a wanted position.

Based on the collected information, in a consecutive step (v) machining path data is generated for removing excess material of the workpiece 100 based on the offset information. A surplus material area which is determined to have excess material to be removed is highlighted in FIG. 1 by reference numeral 113. It has to be noted that the machining path data may define a region that may exceed the surplus material area 113 so allow a smooth transition from the original surface of the pressure side surface 112 to the machined area, will be generated in the next processing step (vi).

Finally, in step (vi) this highlighted area is machined, particularly by milling. The machining of the aerofoil shaped section 102 is executed in chordwise direction according to the machining path data to remove the excess material to conform the surface profile of the aerofoil shaped section 102 to the nominal surface profile. That means a path of a milling tool is oriented in chordwise direction.

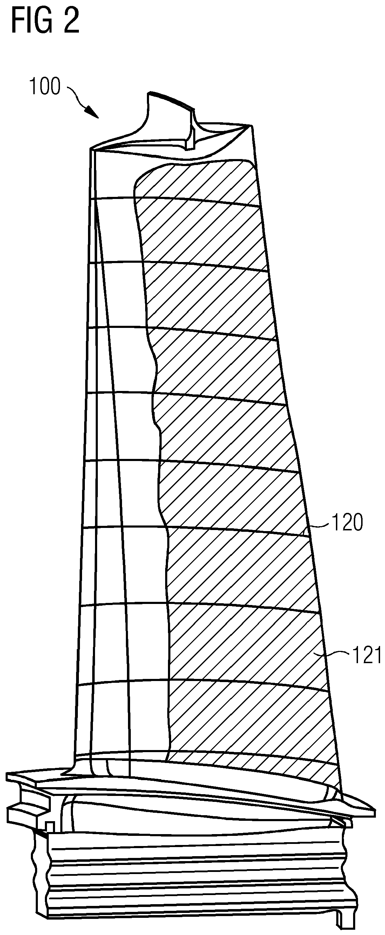

In FIG. 2 machining paths 120 defined by the generated machining path data are shown for each of the chordwise oriented planes 1, 2, 3,..., 9. The region in which the machining tool has removed material after step (vi) is indicated by machined region 121. In FIG. 2 the machined region 121 covers a different region than highlighted in FIG. 1 as these show two different examples of how much material should be removed from two different individual workpieces.

As a consequence, the pressure side surface 112 will be a substantially smooth surface with tight tolerances conforming with the aerofoil shaped section profile to the nominal surface profile, particularly at a trailing edge region 101.

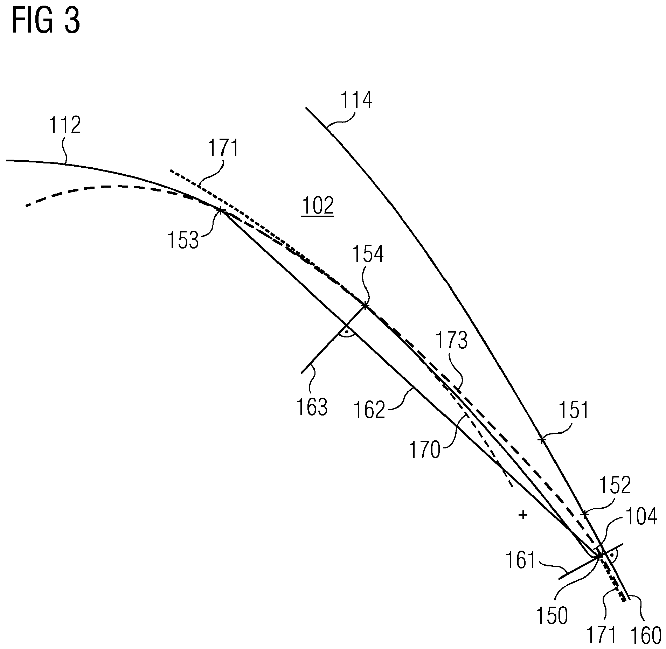

FIG. 3 illustrates the probing and the machining path 120 for an exemplary one of the chordwise oriented planes 1. The method will generate similar data for the other chordwise oriented planes 2, 3, ..., 9. An aft section of the aerofoil is depicted in the chordwise oriented plane 1 with a focus on the trailing edge section, in which the pressure side 112 joins a suction side surface 114 of the aerofoil shaped section 112 at the trailing edge 104.

According the exemplary embodiment a first probing point, a trailing edge probing point 150, is located at the trailing edge 104 at which, by probing, a geometric position of surface of the workpiece is determined. Two suction side probing points 151, 152 are located at the suction side surface 114 in an aft region of the aerofoil shaped section 102. One pressure side probing point 153 is located at the pressure side surface 112, also in an aft region of the aerofoil shaped section 102. All these probing points are used to position a probe to determine surface profile coordinates of the workpiece 100.

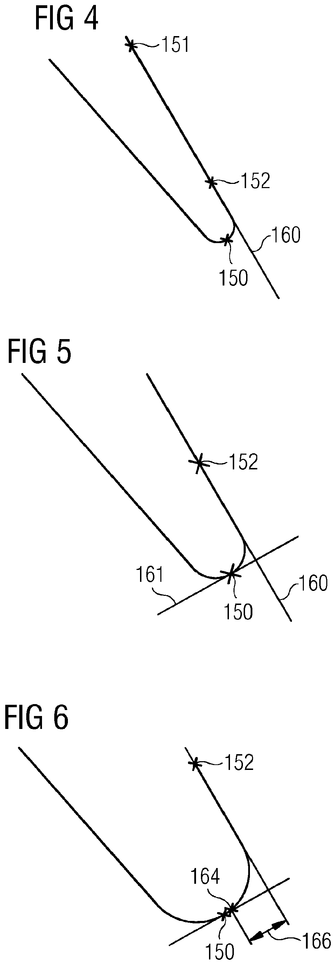

A first straight reference line 160 may be a straight line through the two suction side probing points 151, 152, see also FIG. 4 which shows a detail of FIG. 3. A second straight reference line 161 will be determined as being perpendicular to the first straight reference line 160, wherein the second straight reference line 161 is positioned that it intersects the aerofoil surface at the trailing edge probing point 150, see FIG. 5 which shows further details of FIG. 3.

For the trailing edge 104, the wanted trailing edge thickness 166 may be a pre-defined value. This is further illustrated in FIG. 6 which shows further details of FIG. 3. This pre-defined trailing edge thickness 166 will be applied along the second straight reference line 161, beginning from an intersection of the first straight reference line 160 and the second straight reference line 161. Based on that a thickness target point 164 is defined on the second straight reference line 161 at the trailing edge 104 of the workpiece 100.

The pressure side probing point 153 is defined at which a probe determines surface profile coordinates of the workpiece 100 at the pressure side surface 112. A further pressure side surface point 154 is defined at a further position at the pressure side surface 112 at which again a probe determines surface profile coordinates of the workpiece 100.

For all these probing points corresponding reference coordinates of a nominal surface model of a nominal workpiece model are determined and put in relation to the probing points.

For example the suction side probing points 151, 152 and the trailing edge probing point 150 will be aligned with their corresponding nominal surface model coordinates, which defines reference positions which will be used in following processing steps, i.e. to derive the first straight reference line 160 and the second straight reference line 161.

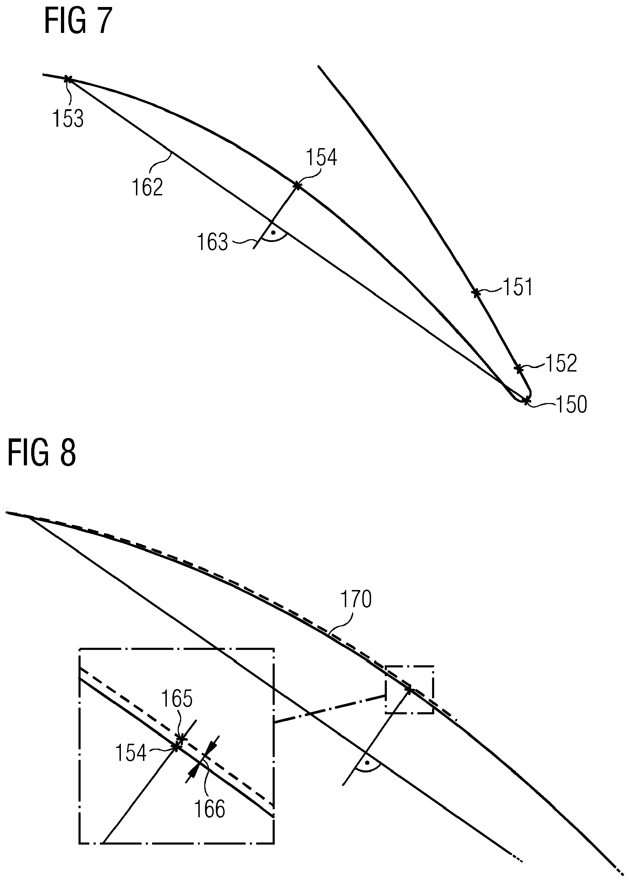

A third straight reference line 162 is defined as a straight line between the first pressure side probing point 153 and the trailing edge probing point 150. A fourth straight reference line 163 will be determined as being perpendicular to the third straight reference line 162, wherein the fourth straight reference line 163 is positioned that it intersects the further pressure side surface point 154. Details can be seen in FIG. 7 which shows details of FIG. 3.

Furthermore, for the further pressure side surface point 154 a pre-defined machining depth in direction of the fourth straight reference line 163 is defined that results in a position that will be called pressure side depth point 165, see FIG. 8.

A first circle 170, particular a circular curve but also an elliptic curve may be used, is placed that the first pressure side probing point 153 and the pressure side depth point 165 are placed on the first circle 170. The radius may be derived from the nominal model surface curvature. The radius of the first circle 170 may be pre-defined.

Referring again to FIG. 3, a second circle 171, particular a circular curve but also an elliptic curve may be used, is placed that the thickness target point 164 are placed on the second circle 171. Furthermore the second circle 171 touches tangentially the first circle 170. The radius may be derived from the nominal model surface curvature. The radius of the second circle 171 may be pre-defined.

A path of the first circle 170 and the second circle 171 is blended such that an envelope 173 - e.g. elliptic envelope or a complex envelope - is defined as a curved connection between a tangent of the first circle 170 and a tangent of the second circle 171.

This envelope 173 represents offset information between the digitised nominal surface profile data and the surface shape of the workpiece 100. It also represents the machining path data defining the machining path for removing excess material of the workpiece. Thus from the envelope 173 machining path data is generated which is used to address a machining tool for one specific chordwise oriented plane 1.

The machining path will reside also in the chordwise oriented plane 1.

This procedure has the overall advantage that aerofoils with narrow trailing edges can be produced which may not be possible if the aerofoil is only cast. #

Analysis and also machining in the chordwise oriented planes 1, 2, ..., 9 has the advantage that uneven surface structures due to machining will be in flow direction of the main fluid when the workpiece is in operation in the turbomachine. That means that the fluid will even be guided from leading edge to trailing edge which will reduce unwanted turbulences.

FIG.2 and FIG. 3 show how a machining path can be derived for the plurality of chordwise oriented planes 1, 2, ..., 9. Machining is also required for planes in between the dedicated plurality of chordwise oriented planes 1, 2, ..., 9. Therefore also a blending process is also executed between two adjacent ones of the plurality of chordwise oriented planes 1, 2, ..., 9.

Particularly intermediate machining path data is generated from a first set of the generated machining path data for a first one of the plurality of chordwise oriented planes (e.g. plane 1 - and from a second set of generated machining path data for a second one of the plurality of chordwise oriented planes - e.g. plane 2 -, the intermediate machining path data defining a plurality of chordwise arranged machining paths each oriented parallel to another. The aerofoil shaped section 102 is machined, particularly milled, along the plurality of chordwise arranged machining paths according to the intermediate machining path to remove the excess material to conform the surface profile of the aerofoil shaped section 102 to the nominal surface profile.

The intermediate machining path data may be generated along a predefined spanwise envelope or by blending the first set of the generated machining path data with the second set of the generated machining path data.

It has to be noted that the given example with five probing points per chordwise oriented plane is just an example and can be extended to more probing points for each plane. Also a smaller number of probing points may be feasible.

Also the CAM model of machining path data is not restricted to the shown approximation of two curves 170 and 171. A different procedure can be applied to define the machining path data.

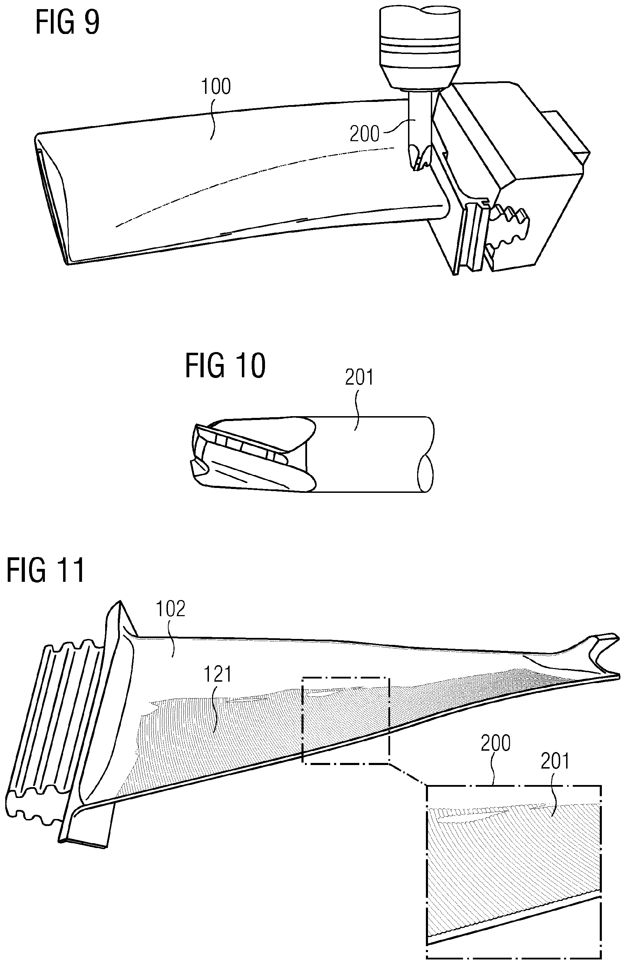

FIG. 9 illustrates the machining process as one step of the inventive method. A 5-axis milling machine will operate a cutter 200. The cutter follows the machining path data that is derived from the offset between the surface of workpiece 100 and the nominal dimensions of the workpiece 100.

FIG. 10 shows an exemplary milling cutter 201.

It has to be noted that the machine path data can be used to operate firstly a rough milling process, which is followed secondly by a fine milling process. Both steps could be performed by milling. Alternatively the rough machining process can be performed by milling, while the fine machining can be performed by brushing, for example with a ceramic fiber brush.

FIG. 11 shows schematically a machined workpiece after performing the inventive method. In the figure the machined region 121 is shown. In an enlarged view 200 of a sub section of the aerofoil shaped section 102 a plurality of depressions 201 are shown which are all parallel to another and oriented in chordwise direction. This is the result of the machining process, which is operated in chordwise direction. Even though the depressions 201 may be very small, this orientation may be advantageous to not initiate turbulences when installed and operated in a turbomachine. Even more, these depressions 201 may improve to straighten the fluid flow along the surface of the aerofoil shaped section 201.

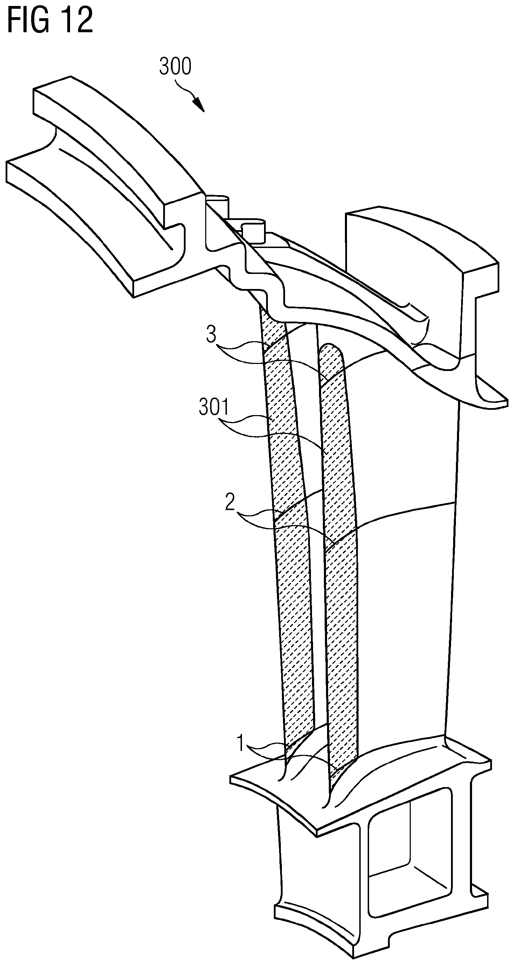

FIG. 12 illustrates that the inventive method is not limited to rotor blades or to single aerofoil components. In the shown example a stator vane 300 configured as a doublet with two aerofoils 301.

For this staor vane 300 substantially the same processing steps as explained before are executed, but twice for each aerfoil 301. A digitised nominal surface profile data representing a nominal surface profile of a nominal workpiece model is provided for both aerofoils 301. Both aerofoils 301 are probed by probing a surface profile of the workpiece in a plurality of chordwise oriented planes substantially perpendicular to a spanwise direction to determine surface profile coordinates, the planes being located at different span heights, wherein in each plane of each aerofoil 301 the probing is performed at at least three probing points located at surface portions of the aerofoil shaped parts in proximity of the trailing edges of each aerofoil 301. A plurality of offset information is determined, each representing an offset for each probing point between the surface profile coordinates and corresponding nominal surface profile coordinates of the digitised nominal surface profile data. Machining path data is generated for removing excess material of the workpiece at the surfaces of each aerofoil 301 based on the offset information. Furhter, the surfaces of each aerofoil 301 are machined, particularly milling, in chordwise direction according to the machining path data to remove the excess material to conform the surface profile of the surfaces of each aerofoil 301 to the nominal surface profile.

The explained embodiments have in common that a workpiece, for example a cast workpiece that does not fulfil all dimensions perfectly due to manufacturing restrictions - e.g. as thin structures cannot be cast reliably - can be adaptively machined so that the machined workpiece conforms with pre-defined nominal dimensions of the workpiece (e.g. a CAD model of the "perfect" component). The method uses probing at a limited number of positions to enable quick evaluation of the workpiece. The probing points are arranged in chordwise oriented planes as this is also the orientation of the machining path (at the later machining step).

Based on the probing points a CAD model is derived for the individual workpiece. For the CAD model, to simplify the creation of the CAD model, two curves - or more - may be derived from the probing points, from which an envelope curve will be derived which will define the planned surface of the workpiece after the later machining step. So a new surface is created in a digital representation. This surface defines the new aero-profile of the blade or vane. So a unique CAD file is created for each individual workpiece.

Based on that a CAM model is created from the unique CAD file, i.e. a unique CAM model is created.

And finally, a milling machine uses the unique CAM model to produce the workpiece with the new aero profile.

This procedure is present to be operated individually for each single workpiece that has been manufactured. The parts are individually measured to handle casting variations. This is advantageous as blade and vane castings today have limits in how thin trailing edges of aerfoils can be. There is a trade-off between thickness and metallurgical demands. If the trailing edge is too thin it is a high risk of insufficient metallurgical quality. From an aerodynamic point of view there are benefits of making thin trailing edges. This is possible with the new adaptive machining. Nevertheless correct metallurgical characteristics remain, as the workpiece is cast with a thick trailing edge with good metallurgy, and then the trailing edge region is machined to the correct shape.

In general the advantages for such processing are that the turbine components will have better performance due to reduced losses. Thinner trailing edge leads to better aerodynamic with the consequence of reduced losses and eventually a higher efficiency of a turbine or turbomachine.

## Claims

1. Method of adaptively machining of a workpiece (100) to conform with pre-defined nominal dimensions of the work-piece (100) comprising the steps of:
- providing the workpiece (100) which comprises an aerofoil shaped section (102), the aerofoil shaped section (102) comprising a pressure side surface (112), a suction side surface (114), and a trailing edge (104), the trailing edge (104) extending in a spanwise direction (110);
- providing digitised nominal surface profile data representing a nominal surface profile of a nominal workpiece model;
- probing a surface profile of the workpiece (100) in a plurality of chordwise oriented planes (1, 2, ..., 9) substantially perpendicular to the spanwise direction (110) to determine surface profile coordinates, the planes being located at different span heights, wherein in each plane the probing is performed at at least three probing points (150, ...) located at surface portions of the aerofoil shaped section (102) in proximity of the trailing edge (104);
- determining a plurality of offset information, each representing an offset for each probing point (150, ...) between the surface profile coordinates and corresponding nominal surface profile coordinates of the digitised nominal surface profile data;
- generating machining path data for removing excess material of the workpiece (100) based on the offset information;
- machining, particularly milling, the aerofoil shaped section (102) in chordwise direction according to the machining path data to remove the excess material to conform the surface profile of the aerofoil shaped section (102) to the nominal surface profile.

2. Method according to claim 1,
**characterised in that**
the step of machining the aerofoil comprises partial steps of:
- as a first partial step, rough machining, particularly milling, according to the machining path data to remove a first amount of the excess material, and
- as a consecutive second partial step, fine machining, particularly polishing, according to the machining path data to remove a second amount of the excess material.

3. Method according to any one of the preceding claims,
**characterised in that**
the machining the aerofoil is limited to the pressure side surface (112) of the aerofoil, particularly limited to the pressure side surface (112) of the aerofoil in proximity of the trailing edge (104).

4. Method according to any one of the preceding claims,
**characterised in that**
the machining the aerofoil is limited to the pressure side surface (112) of the aerofoil from the trailing edge (104) up to 80%, preferably up to 70%, of an overall pressure side surface (112) length from the trailing edge (104) to a leading edge of the aerofoil shaped section (102).

5. Method according to any one of the preceding claims,
**characterised in that**
the probing at the at least three probing points (150, ...) is performed at
- one probing point (150) at the trailing edge (104); and
- at least one probing point (153), preferably one or two probing points, at the pressure side surface (112) in proximity of the trailing edge (104); and
- at least one probing point (151, 152), preferably two probing points, at the suction side surface (114) in proximity of the trailing edge (104).

6. Method according to any one of the claims 1 to 5,
**characterised in that**
- the probing at the at least three probing points (150, ...) is performed such that at least one suction side probing point (151, 152), preferably two probing points, are defined at the suction side surface (114) in proximity of the trailing edge (104); and
- a first straight line (160) is defined through two of the at least one suction side probing points (151, 152) to define a first reference line to align with the a first nominal reference line of the nominal workpiece model.

7. Method according to claim 6,
**characterised in that**
- the probing at the at least three probing points (150, ...) is further performed such that one trailing edge probing point (150) is defined at the trailing edge (104); and
- a second straight line (161) is defined through the trailing edge probing point (150), the second straight line being perpendicular to the first straight line (160), wherein the second straight line (161) defines a second reference line to align with the a second nominal reference line of the nominal workpiece model.

8. Method according to any one of the preceding claims,
**characterised in that**
- the probing at the at least three probing points (150, ...) is performed within a first one of the chordwise oriented planes (1, 2, ..., 9) such that at least one pressure side probing point (153), preferably two probing points, are defined at least at the pressure side surface (112) in proximity of the trailing edge (104); and
- a first circle (170) located in the first one of the chordwise oriented planes (1, 2, ..., 9) is defined with a curve through a first one of the at least one pressure side probing points (153) with a first radius; and
- a second circle (171) located in the first one of the chordwise oriented planes (1, 2, ..., 9) is defined with a curve through a point (165) of pre-defined depth in respect of a second one of the at least one pressure side probing points (153) with a second radius; and
- a first group of machining path data is defined by a first segment of the first circle (170); and
- a second group of machining path data is defined by a segment of the second circle (171).

9. Method according to claim 8,
**characterised in that**
- a substantially elliptic envelope (173) for the first circle (170) and the second circle (171) is determined within the first one of the chordwise oriented planes (1, 2, ..., 9) for a pressure side surface (112) region located between the first circle (170) and the second circle (171), the elliptic envelope (173) defining a curved connection between a tangent of the first circle (170) and a tangent of the second circle (171); and
- a third group of machining path data is defined by a segment of the envelope (173).

10. Method according to any one of the claims 6 or 7,
**characterised in that**
the first radius and the second radius are predefined or alternatively are derived from a nominal curvature of the nominal workpiece model at the nominal surface profile coordinates of the digitised nominal surface profile data which correspond to the respective surface profile coordinates.

11. Method according to any one of the preceding claims,
**characterised in that**
- intermediate machining path data is generated from a first set of the generated machining path data for a first one of the plurality of chordwise oriented planes (1, 2, ..., 9) and from a second set of generated machining path data for a second one of the plurality of chordwise oriented planes (1, 2, ..., 9), the intermediate machining path data defining a plurality of chordwise arranged machining paths each oriented parallel to another; and
- machining, particularly milling, the aerofoil shaped section (102) along the plurality of chordwise arranged machining paths according to the intermediate machining path to remove the excess material to conform the surface profile of the aerofoil shaped section (102) to the nominal surface profile.

12. Method according to any one of the preceding claims,
**characterised in that**
- the machining path data is generated only for a mid region of the trailing edge (104), the mid region being defined as a region with a distance to longitudinal ends of the trailing edge (104) of at least 20% of an overall length of the trailing edge (104).

13. CAD module for generating machining path data for adaptively machining of a workpiece (100) to conform with pre-defined nominal dimensions of the workpiece (100), wherein
- the CAD module is arranged to retrieve provided surface profile coordinates for the workpiece (100), the workpiece (100) comprising an aerofoil shaped section (102), the aerofoil shaped section (102) comprising in turn a pressure side surface (112), a suction side surface (114), and a trailing edge (104), the trailing edge (104) extending in a spanwise direction (110),
the surface profile coordinates are provided by probing a surface profile of the workpiece (100) in a plurality of chordwise oriented planes (1, 2, ..., 9) substantially perpendicular to the spanwise direction (110) to determine surface profile coordinates, the planes being located at different span heights, wherein in each plane the probing is performed at at least three probing points (150, ...) located at surface portions of the aerofoil shaped section (102) in proximity of the trailing edge (104); and
- the CAD module is further arranged to retrieve provided digitised nominal surface profile data representing a nominal surface profile of a nominal workpiece model;
and wherein
- the CAD module is arranged to determine a plurality of offset information, each representing an offset for each probing point (150, ...) between the surface profile coordinates and corresponding nominal surface profile coordinates of the digitised nominal surface profile data; and
- the CAD module is arranged to generate machining path data for removing excess material of the workpiece (100) based on the offset information, the machining path data defining information for machining, particularly milling, the aerofoil shaped section (102) in chordwise direction according to the machining path data to remove the excess material to conform the surface profile of the aerofoil shaped section (102) to the nominal surface profile.

14. Vane or blade comprising an aerofoil shaped section (102)
**characterised in that**
the vane or blade is an adaptively machined workpiece (100) with at least one aerofoil shaped section (102) processed according to one of the claims 1 to 12.
